# EUROPÄISCHE PATENTSCHRIFT

(11) **EP 0 733 389 B1**
(45) Veröffentlichungstag und Bekanntmachung des Hinweises auf die Patenterteilung: **14.06.2000**
(21) Anmeldenummer: 96100094.0
(22) Anmeldetag: 05.01.1996
(51) Int. Cl.: B01D 1/16, B01D 17/00, C02F 1/40

(54) **Vorrichtung zum Trennen von Fluidgemischen**
Device for separating fluid mixtures
Dispositif pour séparer des mélanges de fluides

(30) Priorität: 20.03.1995 DE 19510023
(43) Veröffentlichungstag der Anmeldung: 25.09.1996
(73) Patentinhaber: HYDAC FILTERTECHNIK GmbH, D-66273 Sulzbach (DE)
(72) Erfinder: Tumbrink, Manfred B., Dr.-Ing., D-64732 Bad König (DE); Herold, Frank, Dipl.-Ing., D-66299 Friedrichsthal (DE)
(74) Vertreter: Patentanwälte Bartels und Partner

(56) Entgegenhaltungen:
- EP-A- 0 141 533
- EP-A- 0 148 444
- EP-A- 0 261 383
- US-A- 4 608 119

## Beschreibung

Die Erfindung betrifft eine Vorrichtung zum Trennen von Fluidgemischen, insbesondere von Öl und Wasser, mit einem Vakuumbehälter, in dem das Fluidgemisch mittels einer Zerstäubungseinrichtung zerstäubbar ist, wobei mindestens eine flüssige Komponente des Fluidgemisches nach seiner Auftrennung aus dem Vakuumbehälter ableitbar ist und die jeweils anderen Komponenten mittels einer Vakuumpumpe aus dem Behälter gas- und/oder dampfförmig absaugbar sind.

Bei einer gattungsfremden Vorrichtung zum Trennen eines Öl/Wasser-Gemisches nach der EP 0148 444 A2 ist ein Vorabscheideraum vorgesehen, in dem zunächst die gröberen Bestandteile des Öls von dem Gemisch abgetrennt werden. Das derart vorgereinigte Gemisch wird dann in eine Koaleszierkammer eingeleitet, die eine Vielzahl von Koaleszierkörpern enthält, die aus einem oleophilen Kunststoff bestehen und leichter als Wasser sind. An der oleophilen spezifisch großen Oberfläche dieser Körper setzen sich auch feinste Ölpartikel ab, die auf den Körpern zusammenfließen und als größere, leicht abtrennbare Öltropfen in den Abscheideraum aufsteigen, wo sie in einem Ölsammelraum sich ansammeln und entfernt werden können. Aus dem Abscheideraum selbst fließt das Wasser über eine Trennwand durch ein weiteres Rohr ab. Diese bekannte Vorrichtung baut groß auf und, obwohl mit ihr eine Ölabscheidung über einen langen Zeitraum wartungsfrei ist, sind die oleophilen Koaleszierkörper von Zeit zu Zeit gegen neue auszutauschen, was mithin zu Stillstandszeiten der Anlage führt. Im Hinblick auf die Baugröße der Anlage ist die Austragsleistung an voneinander getrenntem Öl und Wasser relativ gering.

Bei einer weiteren gattungsfremden Vorrichtung, die unter dem Markennamen "CurePac" vertrieben wird, ist zwar gemäß dem kennzeichnenden Teil des Anspruches 1 innerhalb des Vakuumbehälters eine aus Hydropumpe und Hydromotor bestehende Baueinheit angeordnet, die das zu trennende Öl-Wasser-Gemisch in Bewegung hält; allein diese bekannte Vorrichtung verfügt über keine Zerstäubungseinrichtung, sondern die Auftrennung des Fluidgemisches geschieht dadurch, daß man innerhalb des Vakuumbehälters das Wasser im Öl zum Kochen bringt und dadurch abscheidet. Es hat sich gezeigt, daß mit dieser bekannten Vorrichtung eine optimale Auftrennung des Öl-Wasser-Gemisches nicht möglich ist und daß der Auftrennprozeß energetisch relativ ungünstig ist.

Bei einer gattungsgemäßen mobilen Entwässerungsanlage, die unter der Markenbezeichnung "HSP" auf dem Markt angeboten wird und die Wasser, Schmutz und Luft aus Hydraulik- und Schmierflüssigkeiten entfernt, wird das Fluidgemisch in der Vakuumkammer auf die Mitte einer Drehscheibe geführt, die von einem außerhalb des Vakuumbehälters angeordneten Scheibenmotor antreibbar ist. Durch die Zentrifugalkraft wird das Fluidgemisch zum Rand der Drehscheibe geschleudert, wobei sich die Filmdicke verringert. Am Rand der Scheibe zerstäubt das Öl dann zu kleinen Tröpfchen, wodurch eine große Oberfläche entsteht. Über diese feinen Tröpfchen streicht Luft mit einer niedrigen relativen Luftfeuchtigkeit, die freies und gelöstes Wasser aufnimmt. Die Luft nimmt mithin das Wasser aus dem Öl auf und es ist möglich, auch unter ungünstigen Bedingungen von 100 % relativer Feuchte der Umgebungsluft den Wassergehalt des Öles auf 20 % der Sättigung herabzusetzen. Anschließend werden Wasser und Gase mit der Luft durch eine Vakuumpumpe aus der Vakuumkammer abgesaugt und so das Öl vom Wasser und sonstigen Bestandteilen getrennt. Mit dieser bekannten Öl-Entwässerungsanlage ist jedoch nur ein geringer Grad an Zerstäubung möglich, wobei für den Antrieb der als Zerstäubungseinrichtung dienenden Drehscheibe der Antriebsmotor eine entsprechend hohe Leistung erbringen muß. Ein wirtschaftlicher Betrieb mit dieser bekannten Vorrichtung ist mithin nicht möglich.

Aus den Dokumenten EP 0 261 383 A und US 4 608 119 sind Vorrichtungen zum Trennen von Fluidgemischen gemäß dem Oberbegriff von Anspruch 1 bekannt.

Ausgehend von diesem Stand der Technik liegt der Erfindung die Aufgabe zugrunde, eine Vorrichtung zum Trennen von Fluidgemischen, insbesondere von Öl und Wasser, zu schaffen, die bei geringer Baugröße eine optimale Trennung der Komponenten erlaubt sowie wirtschaftlich günstig ist.

Eine dahingehende Aufgabe löst eine Vorrichtung mit den Merkmalen des Anspruches 1.

Dadurch, daß gemäß dem kennzeichnenden Teil des Anspruches 1 die flüssige Komponente mittels einer von einem Hydromotor antreibbaren Hydropumpe ableitbar ist, die Zerstäubungseinrichtung mindestens eine Zerstäuberdüse für das Fluidgemisch aufweist, daß die Hydropumpe mit dem Hydromotor eine innerhalb des Vakuumbehälters angeordnete Baueinheit bildet und daß der Hydromotor von dem mittels eines weiteren Antriebs in Bewegung setzbaren Fluidgemisch antreibbar ist, sobald ein vorgebbarer Füllstand im Vakuumbehälter den Austrag der jeweils flüssigen Komponente mittels der Hydropumpe erfordert, ist auch bei kleiner Baugröße der Vorrichtung eine optimale Trennung der Komponenten des Fluidgemisches möglich, wobei insbesondere Wasser - auch in gelöster Form - aus Ölen und aus stabilen Emulsionen herausgenommen werden kann.

Sofern die erfindungsgemäße Vorrichtung zum Trennen von Öl und Wasser eingesetzt wird, wird mittels des weiteren Antriebes vorzugsweise in Form einer Hochdruckpumpe das zu entwässernde Öl angesaugt und über die jeweilige Zerstäuberdüse in den Vakuumbehälter eingespritzt. Durch die im Vakuumbehälter einstellbaren Druck- und Temperaturverhältnisse entsteht Wasserdampf, der wiederum mittels einer Vakuumpumpe aus dem Vakuumbehälter absaugbar ist. Das von Wasser gereinigte Öl läßt sich dann mittels der Hydropumpe aus dem Vakuumbehälter zurückfördern. Die beim Betrieb des Hydromotors entstehende Abwärme läßt sich unmittelbar zum Beheizen des Vakuumbehälters in diesen abgeben, so daß mit geringem Energieeinsatz und mithin energetisch günstig eine hohe Trennleistung der voneinander zu trennenden Komponenten des Fluidgemisches, insbesondere Öl und Wasser, erreichbar ist.

Bei einer bevorzugten Ausführungsform der erfindungsgemäßen Vorrichtung ist die Zerstäuberdüse zum Erzeugen eines Vollkegelstrahles an Fluidgemisch aus einer Vollkegeldüse gebildet. Hierbei kommt es zu einer gleichmäßigen Flüssigkeitsverteilung über einer Kreisfläche und es läßt sich durch Erzielen turbulenter Strömungen mit unterschiedlichen Tangential- und Axialgeschwindigkeitskomponenten ein insgesamt großes Tropfenspektrum erzielen, d.h. eine optimale Größe von Tropfen und davon die maximal erreichbare Anzahl an Tropfen zu erreichen. Innerhalb des erzeugten Vollkegelstrahles kommt es zu einem Öl-Wasser-Nebel und zu einer homogenen Verteilung dieser Komponenten.

Bei einer weiteren bevorzugten Ausführungsform der erfindungsgemäßen Vorrichtung ist die Zerstäubungseinrichtung endseitig in einer Trennkammer angeordnet, die innerhalb des Vakuumbehälters einen Zerstäubungsbereich von einem Flüssigkeitsbereich und einem Absaugbereich trennt. Vorzugsweise besteht dabei die Trennkammer aus einem im wesentlichen konusförmigen Trennmantel, der umfangseitig geschlossen ist und sich zum Flüssigkeitsbereich im Durchmesser erweitert sowie an der Übergangsstelle zwischen Flüssigkeits- und Absaugbereich einen Durchtrittsbereich mit der Behälterwand des Vakuumbehälters begrenzt. Aufgrund der derart ausgebildeten Trennkammer ist der Zerstäubungsvorgang innerhalb des Vollkegelstrahles nicht behindert und eine vollständige sichere Trennung der angesprochenen Bereiche untereinander möglich.

Bei einer weiteren, besonders bevorzugten Ausführungsform der erfindungsgemäßen Vorrichtung mündet in Strömungsrichtung im Bereich der Zerstäubungseinrichtung eine Lufteintrittsstelle in den Vakuumbehälter, deren freier Querschnitt vorgebbar ist, wobei in einem Anschluß zwischen der Vakuumpumpe und dem Vakuumbehälter mindestens ein Abscheider für den Erhalt flüssiger Bestandteile aus der gas- und/oder dampfförmigen Komponente des Fluidgemisches vorhanden ist. Durch das Einleiten von Luft in Strömungsrichtung hinter der Zerstäubungseinrichtung entspannt sich diese entsprechend und ist mithin in der Lage, mehr Wasserdampf für den eigentlichen Trennprozeß aufzunehmen. Eventuell mitgeführter Ölnebel nach dem Zerstäubungsvorgang im Absaugbereich läßt sich über den Abscheider zurückhalten.

Bei einer weiteren bevorzugten Ausführungsform der erfindungsgemäßen Vorrichtung ist die Baueinheit innerhalb des Flüssigkeitsbereiches im Vakuumbehälter angeordnet, wobei für den Antrieb der Hydropumpe zum Austrag der jeweils flüssigen Komponente der Hydromotor von dem Fluidgemisch antreibbar ist, das von einer weiteren Hydropumpe in Bewegung gesetzt ist, die eingeschaltet ist, sobald der vorgebbare Füllstand im Vakuumbehälter erreicht ist. Die durch den Antrieb des Hydromotors entstehende Wärme läßt sich über den Flüssigkeitsbereich in den Vakuumbehälter einleiten, so daß dort für den Trennvorgang günstige Wärmeverhältnisse herrschen und insbesondere der Austrag der gewonnenen Fluidkomponente über die Hydropumpe der Baueinheit erleichtert ist.

Vorzugsweise wird hierbei in einer Rückführung das Fluidgemisch der Zerstäubungseinrichtung über den Hydromotor zugeführt und mittels einer Unterbrechungseinrichtung, insbesondere in Form eines Schaltventiles, die Hauptzufuhr des Fluidgemisches in den Vakuumbehälter unterbunden. Auf diese Art und Weise läßt sich unabhängig von den Füllständen im Flüssigkeitsbereich des Vakuumbehälters die Anlage kontinuierlich betreiben, wobei bei leerem Flüssigkeitsbereich oder bei geringen in ihm angesammelten Mengen das Schaltventil wiederum die Hauptzufuhr freigibt. Bei einem vorgebbaren Füllstand beginnt dann unter Abschluß der Hauptzufuhr der Austrag der Flüssigkeitsmenge mittels der Hydropumpe in einen Tank, aus dem die Hauptzufuhr mit dem Fluidgemisch ansonsten versorgt ist.

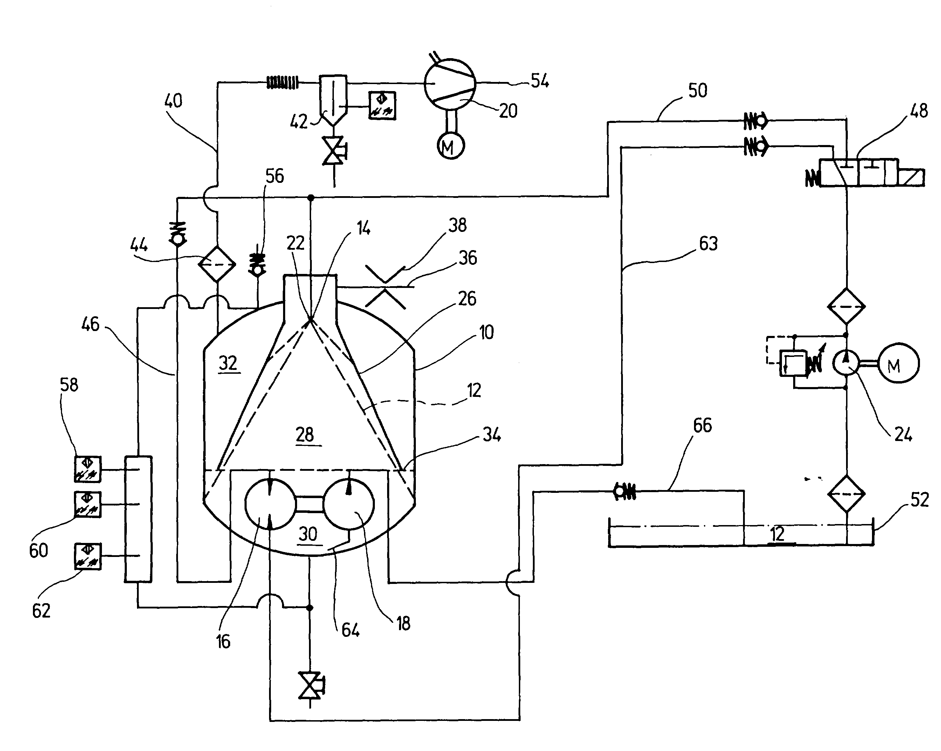

Im folgenden ist die erfindungsgemäße Vorrichtung anhand der Zeichnung näher erläutert. Die einzige Figur zeigt dabei den Schaltplan der Vorrichtung.

Die Vorrichtung zum Trennen von Fluidgemischen, insbesondere von Öl und Wasser, weist einen Vakuumbehälter 10 auf, in den das Fluidgemisch, hier in Form des Öl-Wasser-Gemisches 12, mittels einer Zerstäubungseinrichtung 14 zerstäubbar ist. Die flüssige Komponente des Fluidgemisches, hier in Form von Öl, ist nach seiner Auftrennung mittels einer von einem Hydromotor 16 antreibbaren Hydropumpe 18 aus dem Vakuumbehälter 10 ableitbar, wobei die jeweils anderen Komponenten, hier im wesentlichen in Form von Wasserdampf, mittels einer Vakuumpumpe 20 aus dem Vakuumbehälter 10 gas- und/oder dampfförmig absaugbar sind. Die Zerstäubungseinrichtung 14 weist eine Zerstäuberdüse in Form einer Vollkegeldüse 22 auf zum Erzeugen eines Vollkegelstrahles an Fluidgemisch innerhalb des Vakuumbehälters 10. Wie sich aus dem Schaltplan nach der Figur ferner ergibt, bildet die Hydropumpe 18 mit dem Hydromotor 16 eine innerhalb des Vakuumbehälters 10 angeordnete Baueinheit aus, wobei der Hydromotor 16 von dem mittels eines weiteren Antriebes, hier in Form einer Hochdruckpumpe 24, in Bewegung setzbaren Fluidgemisch antreibbar ist, sobald ein vorgebbarer Füllstand im Vakuumbehälter 10 den Austrag der jeweils flüssigen Komponente, hier in Form von Öl, mittels der Hydropumpe 18 erfordert.

Die Zerstäubungseinrichtung 14 ist endseitig in einer Trennkammer 26 angeordnet, die innerhalb des Vakuumbehälters 10 einen Zerstäubungsbereich 28 von einem Flüssigkeitsbereich 30 sowie einem Absaugbereich 32 trennt. Die Trennkammer 26 besteht aus einem im wesentlichen konusförmigen Trennmantel, der umfangseitig geschlossen ist und sich zum Flüssigkeitsbereich 30 im Durchmesser erweitert sowie an der Übergangsstelle zwischen Flüssigkeits- und Absaugbereich 30 bzw. 32 einen Durchtrittsbereich 34 mit der Behälterwand des Vakuumbehälters 10 begrenzt.

In Strömungsrichtung des zugeführten Ölstromes mündet vor der Zerstäubungseinrichtung 14 eine Lufteintrittsstelle 36 in den Vakuumbehälter 10, deren freier Querschnitt vorgebbar ist, beispielsweise über eine Blende 38. In dem Anschluß 40 zwischen der Vakuumpumpe 20 und dem Vakuumbehälter 10 ist ein Abscheider 42 für den Erhalt flüssiger Bestandteile aus der dampfförmigen Komponente des Fluidgemisches vorhanden. Der angesprochene Abscheider 42 ist als Tropfenabscheider ausgebildet und kondensiert im wesentlichen Wasser aus der wasserdampfförmigen Phase des Trennprozesses heraus. In Fließrichtung vor dem Abscheider 42 und dem Absaugbereich 32 nachgeordnet ist ein sog. Demister 44 in den Anschluß 40 geschaltet, der eventuell mitgerissene Öltröpfchen aus dem Dampfstrom abscheidet und abfängt.

Der Hydromotor 16 der Baueinheit 16,18 kann in einer Rückführung 46, die von einem Rückschlagventil abgesichert ist, das durch ihn hindurchströmende Fluidgemisch 12 ebenfalls der Zerstäubungseinrichtung 14 zuführen, sofern mittels einer Unterbrechungseinrichtung, hier in Form eines 3/2-Wege-Ventils 48, die Hauptzufuhr 50 in den Vakuumbehälter 10 unterbunden ist.

Zum besseren Verständnis der Arbeitsweise der Vorrichtung wird diese nun im folgenden anhand eines Arbeitsbeispieles und des Schaltplanes nach der Figur näher erläutert.

In einem Tank 52 soll sich das Fluidgemisch in Form des Öl-Wasser-Gemisches 12 befinden. Nach Betätigen des Motors M der Hochdruckpumpe 24 wird das Öl-Wasser-Gemisch 12 aus dem Tank 52 gepumpt und nach Schalten des 3/2-Wege-Ventiles 48 in seine in der Figur gesehen rechte Schaltstellung über die Hauptzufuhr 50 der Zerstäubungseinrichtung 14 zugeführt. Das in der Hauptzufuhr 50 angeordnete Rückschlagventil öffnet dabei und das Rückschlagventil in der Rückführung 46 ist gesperrt. Zwischen dem Tank 52 und der Hochdruckpumpe 24 sowie zwischen dieser und dem 3/2-Wege-Ventil 48 befindet sich ein Sieb bzw. ein Filter, die Grob- und Feinverschmutzungen aus dem Hydraulikkreislauf entfernen. Darüber hinaus ist die Hochdruckpumpe 24 in üblicher Weise über ein Druckbegrenzungsventil abgesichert.

Beim erstmaligen Betätigen der Vorrichtung ist zunächst der Vakuumbehälter 10 leer oder es befindet sich nur eine geringe Menge an Flüssigkeit in Form von Öl im Flüssigkeitsbereich 30. Innerhalb des Vakuumbehälters 10 wird eine Arbeitstemperatur von ca. 20°C bis 60°C sowie ein Absolutdruck von ca. 22000 Pa (220 mbar) eingestellt, was einem Unterdruck von ca. 80000 Pa (0,8 bar) entspricht. Über die Vollkegeldüse 22 der Zerstäubungseinrichtung 14 wird das zugeführte Öl-Wasser-Gemisch 12 innerhalb der konischen Trennkammer 26 vernebelt, wobei die Vorrichtung derart eingestellt ist, daß ein Arbeitspunkt in der Nähe der Dampfdruckkurve von Wasser sich einstellt, der vorzugsweise geringfügig über der Dampfdruckkurve liegt. Ein Arbeitspunkt geringfügig über der Dampfdruckkurve ist technisch gut zu realisieren und ist energetisch in akzeptablen Grenzen. Im Bereich dieses Arbeitspunktes scheidet sich dann aus dem Öl-Wassernebel des Zerstäubungsbereiches 28 Wasserdampf aus, der über den Absaugbereich 32 aus dem Vakuumbehälter 10 ableitbar ist. Der Ölnebel selbst fällt auf der Unterseite des Vakuumbehälters 10 als Flüssigkeit aus und füllt zusehends den Flüssigkeitsbereich 30.

Bei dem angesprochenen Prozeß wird neben einer Entwässerung des Öles auch eine Entgasung desselben erreicht, wobei sich die Gase ebenfalls im Absaugbereich 32 ansammeln. Eventuell in den Absaugbereich 32 mit hineingerissene Öltropfen werden über den Demister 44 und gegebenenfalls über den Abscheider 42 abgeschieden. Über diesen Tropfenabscheider 42 im Anschluß 40 werden im wesentlichen die noch verbleibenden flüssigen Komponenten ausgeschieden, so daß am Auslaß 54 der Vakuumpumpe 20 nur Luft und gereinigter Wasserdampf die Vorrichtung verlassen. Der Vakuumbehälter 10 ist gegen Überdruck durch ein Sicherheitsventil 56 abgesichert. Um innerhalb des Vakuumbehälters 10 insbesondere im Durchtrittsbereich 34 zwischen Flüssigkeitsbereich 30 und Absaugbereich 32 bei einem Aufschäumen des Öls zu verhindern, das dieses in den Absaugbereich 32 gelangt, ist über die konische Erweiterung des Trennkammermantels der freie Querschnitt entsprechend verringert.

Neben einem zentralen Notausschalter 58, der auch von dem angesprochenen Sicherheitsventil 56 entsprechend ansteuerbar ist, verfügt die Vorrichtung über zwei Niveauschalter 60 und 62, wobei bei einer vorgegebenen maximalen Befüllung des Flüssigkeitsbereiches 30 der Niveauschalter 60 schaltet und das 3/2-Wege-Ventil 48 in seine in der Figur gezeigten Schaltstellung verbringt. In dieser Schaltstellung wird dann über die Hochdruckpumpe 24 und das in die Antriebsleitung 63 geschaltete Rückschlagventil der Hydromotor 16 angetrieben, der wiederum die Hydropumpe 18 betätigt, die über eine Saugleitung 64 das im Flüssigkeitsbereich 30 befindliche Öl abgesichert über ein Rückschlagventil über die Rückführleitung 66 das Öl in den Tank 52 zurückpumpt. Das Öl-Wasser-Gemisch 12 des Tanks 52 wird dann von dem Hydromotor 16 über die Rückführung 46 ebenfalls der Zerstäuberdüse 22 zugeführt, wobei die Hauptzufuhr 50 über das Rückschlagventil abgesperrt ist. Obwohl also der Flüssigkeitsbereich 30 innerhalb des Vakuumbehälters 10 leergepumpt wird, findet weiter ein Auftrennen der Bestandteile im Vakuumbehälter 10 statt, so daß ein kontinuierlicher, automatisierbarer Betrieb gewährleistet ist und die Vorrichtung jederzeit unabhängig von ihrem Befüllungszustand eingeschaltet werden kann.

Nachdem im Flüssigkeitsbereich 30 ein vorgebbares unteres Niveau erreicht ist, wird der Niveauschalter 62 geschaltet, was zum Abschalten des Hydromotors 16 führt, der durch entsprechendes Betätigen des 3/2-Wege-Ventiles 48 in seine andere Schaltstellung von der Fluidzufuhr über die Antriebsleitung 63 abgekoppelt wird. Die Hydro- oder Absaugpumpe 18 ist derart dimensioniert, daß sie volumetrisch mehr in den Tank 52 zurückfördert als die Hochdruckpumpe 24 über den Hydromotor 16 und die Zerstäubungseinrichtung 14 in den Vakuumbehälter 10 fördert, so daß gewährleistet ist, daß der Füllstand im Vakuumbehälter 10 tatsächlich sinkt. Die Bedienung der Entwässerungsanlage ist mit drei Tasten möglich, "Ein", "Aus" und "Notaus", und braucht nicht besonders überwacht zu werden. Ferner läßt sich die Vorrichtung für einen mobilen Einsatz sehr klein auslegen und auf einem verfahrbaren Arbeitswagen od.dgl. anbringen. Neben dem angesprochenen Entwässern eines öl-Wasser-Gemisches 12 läßt sich die Vorrichtung auch für vergleichbare Fluidgemische einsetzen, beispielsweise um Flugbenzin im Tank von Kondensaten zu befreien.

## Patentansprüche

1. Vorrichtung zum Trennen von Fluidgemischen, insbesondere von Öl und Wasser, mit einem Vakuumbehälter (10), in dem das Fluidgemisch mittels einer Zerstäubungseinrichtung (14) zerstäubbar ist, wobei mindestens eine flüssige Komponente des Fluidgemisches nach seiner Auftrennung aus dem Vakuumbehälter (10) ableitbar ist und die jeweils anderen Komponenten mittels einer Vakuumpumpe (20) aus dem Vakuumbehälter (10) gas- und/oder dampfförmig absaugbar sind, und wobei die Zerstäubungseinrichtung (14) mindestens eine Zerstäuberdüse für das Fluidgemisch aufweist, dadurch gekennzeichnet, daß die flüssige Komponente mittels einer von einem Hydromotor (16) antreibbaren Hydropumpe (18) ableitbar ist, daß die Hydropumpe (18) mit dem Hydromotor (16) eine innerhalb des Vakuumbehälters (10) angeordnete Baueinheit bildet und daß der Hydromotor (16) von dem mittels eines weiteren Antriebes (24) in Bewegung setzbaren Fluidgemisch antreibbar ist, sobald ein vorgebbarer Füllstand im Vakuumbehälter (10) den Austrag der jeweils flüssigen Komponente mittels der Hydropumpe (18) erfordert.

2. Vorrichtung nach Anspruch 1, dadurch gekennzeichnet, daß die Zerstäuberdüse zum Erzeugen eines Vollkegelstrahles an Fluidgemisch aus einer Vollkegeldüse (22) gebildet ist.

3. Vorrichtung nach Anspruch 1 oder 2, dadurch gekennzeichnet, daß die Zerstäubungseinrichtung (14) endseitig in einer Trennkammer (26) angeordnet ist, die innerhalb des Vakuumbehälters (10) einen Zerstäubungsbereich (28) von einem Flüssigkeitsbereich (30) und einem Absaugbereich (32) trennt.

4. Vorrichtung nach Anspruch 3, dadurch gekennzeichnet, daß die Trennkammer (26) aus einem im wesentlichen konusförmigen Trennmantel besteht, der umfangseitig geschlossen ist und sich zum Flüssigkeitsbereich (30) im Durchmesser erweitert sowie an der Übergangsstelle zwischen Flüssigkeits- und Absaugbereich (30,32) einen Durchtrittsbereich (34) mit der Behälterwand des Vakuumbehälters (10) begrenzt.

5. Vorrichtung nach einem der Ansprüche 1 bis 4, dadurch gekennzeichnet, daß in Strömungsrichtung im Bereich der Zerstäubungseinrichtung (14) eine Lufteintrittsstelle (36) in den Vakuumbehälter (10) mündet, deren freier Querschnitt vorgebbar ist, und daß in einem Anschluß zwischen der Vakuumpumpe (20) und dem Vakuumbehälter (10) mindestens ein Abscheider (42) für den Erhalt flüssiger Bestandteile aus der gas- und/oder dampfförmigen Komponente des Fluidgemisches vorhanden ist.

6. Vorrichtung nach einem der Ansprüche 1 bis 5, dadurch gekennzeichnet, daß die Baueinheit innerhalb des Flüssigkeitsbereiches (30) im Vakuumbehälter (10) angeordnet ist und daß für den Antrieb der Hydropumpe (18) zum Austrag der jeweils flüssigen Komponente der Hydromotor (16) von dem Fluidgemisch antreibbar ist, das von einer weiteren Hydropumpe (24) in Bewegung gesetzt ist, die eingeschaltet ist, sobald der vorgebbare Füllstand im Vakuumbehälter (10) erreicht ist.

7. Vorrichtung nach Anspruch 6, dadurch gekennzeichnet, daß in einer Rückführung (46) der Hydromotor (16) das Fluidgemisch der Zerstäubungseinrichtung (14) zuführt und daß hierbei mittels einer Unterbrechungseinrichtung, insbesondere in Form eines Schaltventiles (48), die Hauptzufuhr (50) des Fluidgemisches in den Vakuumbehälter (10) unterbunden ist.

8. Vorrichtung nach Anspruch 7, dadurch gekennzeichnet, daß bei leerem Flüssigkeitsbereich (30) oder bei geringen in ihm angesammelten Mengen das Schaltventil (48) die Hauptzufuhr (50) freigibt und bei einem vorgebbaren Füllstand unter Abschluß der Hauptzufuhr (50) der Austrag der Flüssigkeitsmenge mittels der Hydropumpe (18) in einen Tank (52) beginnt, aus dem die Hauptzufuhr (50) mit dem Fluidgemisch versorgt ist.

## Claims

1. Apparatus for separating fluid mixtures, in particular of oil and water, with a vacuum tank (10), in which the fluid mixture can be atomised by means of an atomiser (14), in which case at least one fluid component of the fluid mixture, after its separation, can be discharged from the vacuum tank (10) and the respective other components can be sucked in the form of a gas and/or vapour by means of a vacuum pump (20) from the vacuum tank (10) and in which case the atomiser (14) comprises at least one atomiser nozzle for the fluid mixture, characterised in that the fluid component can be discharged by means of a hydraulic pump (18) able to be driven by a hydraulic motor (16), that the hydraulic pump (18) with the hydraulic motor (16) forms a structural unit located inside the vacuum tank (10) and that the hydraulic motor (16) can be driven by the fluid mixture able to be set in movement by means of a further drive (24), as soon as a filling level which can be predetermined in the vacuum tank (10) requires the discharge of the respective fluid components by means of the hydraulic pump (18).

2. Apparatus according to Claim 1, characterised in that the atomiser nozzle for producing a full conical jet of fluid mixture is formed from a full conical nozzle (22).

3. Apparatus according to Claim 1 or 2, characterised in that the atomiser (14) is located on the end side in a separating chamber (26), which inside the vacuum tank (10) separates an atomisation region (28) from a liquid region (30) and a suction region (32).

4. Apparatus according to Claim 3, characterised in that the separating chamber (26) consists of an essentially conical separation surface, which is closed on the periphery and widens out in its diameter towards the liquid region (30) and at the transition point between the liquid and suction region (30, 32) defines a passage region (34) with the container wall of the vacuum tank (10).

5. Apparatus according to one of Claims 1 to 4, characterised in that in the flow direction in the region of the atomiser (14), an air inlet point (36) opens into the vacuum tank (10), whereof the free cross-section can be predetermined and that in a connection between the vacuum pump (20) and the vacuum tank (10), at least one separator (42) for obtaining liquid constituents from the gaseous and/or vaporous components of the fluid mixture is provided.

6. Apparatus according to one of Claims 1 to 5, characterised in that the structural unit is located within the liquid region (30) in the vacuum tank (10) and that for driving the hydraulic pump (18) for the discharge of the respective fluid components, the hydraulic motor (16) can be driven by the fluid mixture, which is set in movement by a further hydraulic pump (24), which is switched on as soon as the filling level which can be predetermined is reached in the vacuum tank (10).

7. Apparatus according to Claim 6, characterised in that in a return line (46) the hydraulic motor (16) supplies the fluid mixture to the atomiser (14) and that in this case by means of an interruption device, in particular in the form of a control valve (48), the main supply (50) of the fluid mixture to the vacuum tank (10) is interrupted.

8. Apparatus according to Claim 7, characterised in that when the liquid region (30) is empty or in the case of small quantities accumulated therein, the control valve (48) releases the main supply (50) and with a filling level which can be predetermined, with shutting-off of the main supply (50), the discharge of the liquid quantity by means of the hydraulic pump (18) into a tank (52) begins, from which the main supply (50) is supplied with the fluid mixture.

## Revendications

1. Dispositif destiné à séparer des mélanges de fluides, en particulier d'huile et d'eau, comprenant un récipient sous vide (10), dans lequel le mélange de fluides peut être pulvérisé au moyen d'un dispositif de pulvérisation (14), dans lequel au moins un constituant liquide du mélange de fluides peut être évacué après sa séparation hors du récipient sous vide (10) et les autres constituants respectifs peuvent être aspirés sous forme de gaz et/ou de vapeur hors du récipient sous vide (10) par une pompe à vide (20), et dans lequel le dispositif de pulvérisation (14) comporte au moins une buse de pulvérisation réservée au mélange de fluides, caractérisé en ce que les constituants liquides peuvent être évacués au moyen d'une pompe hydraulique (18) actionnée par un moteur hydraulique (16), en ce que la pompe hydraulique (18) forme avec le moteur hydraulique (16) une unité hydraulique montée à l'intérieur du récipient sous vide (10) et en ce que le moteur hydraulique (16) peut être actionné par le mélange de fluides mis en mouvement au moyen d'un autre système moteur (24), dès qu'un niveau de remplissage prédéfini dans le récipient sous vide (10) exige l'évacuation des constituants liquides respectifs à l'aide de la pompe hydraulique (18).

2. Dispositif selon la revendication 1, caractérisé en ce que la buse de pulvérisation destinée à projeter le mélange de fluides sous la forme d'un cône plein est formée par une buse à jet conique plein (22).

3. Dispositif selon la revendication 1 ou 2, caractérisé en ce que le dispositif de pulvérisation (14) est monté à l'extrémité d'une chambre de séparation (26), qui délimite à l'intérieur du récipient sous vide (10) une zone de pulvérisation (28) séparée de la zone de liquide (30), ainsi que de la zone d'aspiration (32).

4. Dispositif selon la revendication 3, caractérisé en ce que la chambre de séparation (26) est formée par une chemise de séparation sensiblement conique, dont le pourtour est fermé et dont le diamètre s'élargit en allant vers la zone de liquide (30) et qui, dans la zone de transition entre la zone de liquide et la zone d'aspiration (30, 32), délimite une zone de passage (34) avec la paroi du récipient sous vide (10).

5. Dispositif selon l'une quelconque des revendications 1 à 4, caractérisé en ce qu'une zone d'admission d'air (36), dont la section libre peut être prédéfinie, débouche dans le sens d'écoulement dans le récipient sous vide (10) dans la zone du dispositif de pulvérisation (14) et en ce qu'au moins un séparateur (42) est prévu dans la conduite de raccordement située entre la pompe à vide (20) et le récipient sous vide (10), afin d'obtenir des constituants liquides à partir des composants sous forme de vapeur ou de gaz contenus dans le mélange de fluides.

6. Dispositif selon l'une quelconque des revendications 1 à 5, caractérisé en ce que l'unité hydraulique est montée à l'intérieur de la zone de liquide (30) dans le récipient sous vide (10) et en ce que le moteur hydraulique (16) permettant d'actionner la pompe hydraulique (18) destinée à évacuer les constituants liquides est actionné par le mélange de fluides qui est mis en mouvement par une autre pompe hydraulique (24), qui est mise en service dès que le niveau de remplissage prédéfini dans le récipient sous vide (10) est atteint.

7. Dispositif selon la revendication 6, caractérisé en ce que le moteur hydraulique (16) permet d'acheminer le mélange de fluides à travers une conduite de retour (46) vers le dispositif de pulvérisation (14), et en ce que, de plus, un dispositif d'interruption, formé en particulier par une vanne réglable (48) permet de fermer la conduite d'admission principale (50) par laquelle le mélange de fluides est acheminé vers le récipient sous vide (10).

8. Dispositif selon la revendication 7, caractérisé en ce que, lorsque la zone de liquide (30) est vide ou lorsque les quantités accumulées sont faibles, la vanne réglable (48) ouvre la circulation dans la conduite d'admission principale (50) et, lorsque le niveau de remplissage prédéfini est atteint, ferme la conduite d'admission principale (50) et la pompe hydraulique (18) commence à évacuer les quantités de liquide vers une citerne (52) à partir de laquelle le mélange de fluides est acheminé dans la conduite d'admission principale (50).
